# EUROPÄISCHE PATENTSCHRIFT

(11) **EP 3 793 803 B1**
(45) Veröffentlichungstag und Bekanntmachung des Hinweises auf die Patenterteilung: **24.04.2024**
(21) Anmeldenummer: 19745112.3
(22) Anmeldetag: 24.07.2019
(51) Int. Cl.: B29C 49/48, B29C 49/36, B29C 49/64, B29C 49/02, B29C 49/46

(54) **VERFAHREN UND VORRICHTUNG ZUM UMFORMEN VON KUNSTSTOFFVORFORMLINGEN ZU KUNSTSTOFFBEHÄLTNISSEN MIT VORTEMPERIERUNG VON BLASFORMEN**
METHOD AND DEVICE FOR SHAPING PLASTIC PRE-FORMS TO FORM PLASTIC CONTAINERS INVOLVING THE PRIOR BRINGING TO TEMPERATUREPRELIMINARY TEMPERATURE CONTROL OF BLOW MOULDS
PROCÉDÉ ET DISPOSITIF POUR TRANSFORMER PAR FORMAGE DES ÉBAUCHES EN MATIÈRE PLASTIQUE EN RÉCIPIENTS EN MATIÈRE PLASTIQUE, AVEC THERMORÉGULATION PRÉALABLE DE MOULES DE SOUFFLAGE

(30) Priorität: 24.07.2018 DE 102018117849
(43) Veröffentlichungstag der Anmeldung: 24.03.2021
(73) Patentinhaber: Krones AG, 93073 Neutraubling (DE)
(72) Erfinder: SENN, Konrad, 93073 Neutraubling (DE); HÖLLRIEGL, Thomas, 93073 Neutraubling (DE); VOTH, Klaus, 93073 Neutraubling (DE); BUESS, Armin, 93073 Neutraubling (DE); BRUNNER, Andreas, 93073 Neutraubling (DE); MOEWES, Simon, 93073 Neutraubling (DE); HIRDINA, Jochen, 93073 Neutraubling (DE)
(74) Vertreter: Hannke Bittner & Partner mbB Regensburg
(86) Internationale Anmeldenummer: PCT/EP2019/069899
(87) Internationale Veröffentlichungsnummer: WO 2020/020938

(56) Entgegenhaltungen:
- EP-A1- 2 881 233
- EP-A1- 3 047 959
- EP-A2- 2 556 944
- DE-A1-102012 212 773
- DE-A1-102014 105 762
- DE-A1-102015 116 037

## Beschreibung

Die vorliegende Erfindung bezieht sich auf ein Verfahren und eine Vorrichtung zum Umformen von Kunststoffvorformlingen zu Kunststoffbehältnissen. Derartige Verfahren und Vorrichtungen sind aus dem Stand der Technik seit Langem bekannt. Dabei ist es insbesondere bekannt, dass erwärmte Kunststoffvorformlinge innerhalb von Blasformen durch Beaufschlagung mit einem fließfähigen Medium zu Kunststoffbehältnissen umgeformt werden.

Bei einem herkömmlichen Verfahren werden dabei die Kunststoffvorformlinge mittels eines gasförmigen Mediums und insbesondere mittels Druckluft zu den Kunststoffbehältnissen umgeformt. Bei anderen aus dem jüngeren Stand der Technik bekannt gewordenen Verfahren werden die erwärmten Kunststoffvorformlinge unmittelbar mit einer Flüssigkeit, insbesondere einem später abzufüllenden Produkt beaufschlagt und damit zugleich expandiert und mit der Flüssigkeit und insbesondere dem Getränk befüllt. Die vorliegende Erfindung eignet sich sowohl für Verfahren, bei denen dieses Umformen mittels eines gasförmigen Mediums, d. h. insbesondere mittels Druckluft erfolgt als auch für Verfahren, bei denen das Umformen mittels eines flüssigen Mediums und insbesondere mittels des abzufüllenden Getränks erfolgt.

Derartige Umformungseinrichtungen weisen dabei üblicherweise einen bewegbaren, beispielsweise drehbaren Träger auf, an dem die Umformungsstationen angeordnet sind, wobei während eines Arbeitsverfahrens die Kunststoffvorformlinge während ihres Transports mit diesem Träger bzw. den Umformungsstationen zu den Kunststoffbehältnissen umgeformt werden. Bei manchen Prozessen ist es dabei erforderlich, die jeweiligen Blasformen der Umformungsstationen zu temperieren und insbesondere auch diejenigen Wandungsbereiche, die mit dem zu expandierenden Kunststoffvorformling in Berührung kommen.

Dabei ist es sowohl bekannt, dass die Blasformen mittels elektrischer Energie temperiert, beispielsweise erwärmt werden, als auch mittels eines Temperiermediums, beispielsweise eines erwärmten Öls. Da sich die Umformungsstationen bei vielen Anlagen auf einem sich drehenden Karussell befinden, ist es im Stand der Technik bekannt, Versorgungsleitungen beispielsweise für Strom aber auch für Flüssigkeit von einem stationären Bereich auf einen drehenden Bereich zu koppeln. Eine derartige Maschine ist beispielsweise aus den Druckschriften EP2556944A2 und EP 1 776 224 B1 bekannt. Bei dieser Vorrichtung wird eine karussellartige umlaufende Maschine beschrieben, welche einen drehbaren Fluidanschluss und einen drehbaren Stromanschluss auf einer drehbaren Säule aufweisen, welche mit einer festen Stromversorgung bzw. Fluidversorgung verbunden sind.

Bei der Verwendung von elektrischen Heizmitteln bei einer Umformungseinrichtung oder auch einer anderen Vorrichtung zu Herstellung von Behältnissen aus einem thermoplastischen Material wird insbesondere zu einem Vortemperieren, beispielsweise Aufheizen, der Blasformen ein hohes Maß an Energie verwendet. Dies beruht darauf, dass in diesem zeitlichen Abschnitt der größte Temperaturunterschied überwunden werden muss, um die Blasform von einer Ausgangstemperatur auf eine Betriebstemperatur zu bringen.

Nachdem die Blasform auf eine bestimmte Zieltemperatur gebracht worden ist, muss die Blasform nur noch auf dieser Temperatur gehalten werden und die zu bewältigenden Temperaturunterschiede sind niedriger. Dementsprechend ist es insbesondere von Nöten, bei Beginn der Inbetriebnahme einer Maschine mehr Energie zuzuführen, um eine große Heizleistung zu erreichen und um möglichst schnell auf eine Betriebstemperatur zu kommen.

Im Stand der Technik werden üblicherweise die Blasformen sämtlicher Umformungsstationen der Vorrichtung zum Umformen von Kunststoffvorformlingen zu Kunststoffbehältnissen mit den gleichen Heizelementen in allen Schritten geheizt. Dies sorgt dafür, dass nur mit einer begrenzten Heizleistung zu Beginn geheizt werden kann. Zusätzlich wird bei der Verwendung von elektrischen Heizelementen beim Beginn die meiste Energie benötigt, da hierbei auch die größten Temperaturunterschiede überwunden werden müssen.

Dementsprechend dauert es im Stand der Technik relativ lange, um die Blasformen auf eine Betriebstemperatur zu bekommen. Auch geht hierbei wertvolle Arbeitszeit für die Vorbereitung der Maschine verloren. Daneben müssen auch relativ hohe Leistungen von dem stationären Bereich auf den rotierenden Bereich gekoppelt werden, da eine relativ große Leistung erforderlich ist, wenn alle Heizelemente insbesondere gleichzeitig die Blasformen auf eine Betriebstemperatur bringen sollen.

Der vorliegenden Erfindung liegt daher die Aufgabe zugrunde, die Zeit zur Inbetriebnahme einer derartigen Vorrichtung zu Verkürzen. Auch soll eine derartige Vorrichtung energetisch ausgeglichener arbeiten als dies im Stand der Technik der Fall ist. Damit soll erreicht werden, dass eine entsprechende Vorrichtung schneller in Betrieb genommen werden kann. Vorteilhaft soll auch die Maschine kleiner als im Stand der Technik üblich gestaltet werden und insbesondere auch Energieübertragungsmittel sollten kleinerbauend ausgestaltet werden.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Bei einem erfindungsgemäßen Verfahren zum Betreiben einer Vorrichtung zum Umformen von Kunststoffvorformlingen zu Kunststoffbehältnissen wird in einem Arbeitsbetrieb mittels eines bewegbaren Trägers eine Vielzahl von Umformungsstationen entlang eines vorgegebenen Transportpfads bewegt, wobei diese Umformungsstationen jeweils Blasformanordnungen aufweisen, welche in einem geschlossenen Zustand jeweils Hohlräume ausbilden, innerhalb derer die Kunststoffvorformlinge zu den Kunststoffbehältnissen umgeformt werden und wobei diesen Umformungsstationen die Kunststoffvorformlinge zugeführt werden, um durch Zuführung eines fließfähigen Mediums zu den Kunststoffbehältnissen umgeformt zu werden. Dabei erfolgt diese Umformung wenigstens zeitweise während des Transports der Umformungsstationen entlang des Transportpfads und wenigstens zeitweise werden wenigstens Bestandteile der Blasformanordnung temperiert.

Erfindungsgemäß wird in einem Stillstand des Trägers oder einer Bewegung des Trägers, welche gegenüber einer Bewegung des Trägers im Arbeitsbetrieb verlangsamt ist, eine Vortemperierung zumindest von Bestandteilen der Blasformen durchgeführt.

Es wird daher erfindungsgemäß vorgeschlagen, dass das energieaufwendige Vortemperieren der Blasformen nicht in einem laufenden Betrieb der Maschine, sondern insbesondere bei einem Stillstand des Trägers, beispielsweise eines Blasrads, erfolgt. Unter dem Arbeitsbetrieb der Vorrichtung wird insbesondere ein Produktionsbetrieb verstanden, d. h. ein Betrieb, in dem Kunststoffbehältnisse hergestellt, insbesondere geblasen werden.

Daher wird mit der Erfindung eine Vorrichtung und ein Verfahren vorgeschlagen, welche dazu dienen, die Zeit, welche die Blasformen benötigen, um auf die Betriebstemperatur zu kommen, zu verkürzen und um auch die dafür benötigte Energie oder Leistung bereitzustellen. Dies wird wie oben erwähnt insbesondere dadurch erreicht, dass bei einer stehenden (oder ggfs. nur langsam drehenden) Behälterherstellungsmaschine eine Verbindungsleitung wie unten genauer erläutert bevorzugt eine feste Verbindungsleitung oder Zuführleitung angeschlossen wird, welche die nötige Energie und/oder Leistung liefert, um die Blasformen schneller auf eine Betriebstemperatur zu bringen, sodass insgesamt die Zeit zur Inbetriebnahme der Vorrichtung reduziert wird.

Daneben oder zusätzlich wäre es auch möglich, zusätzliche Heizmittel zu der Maschine zu führen, um eine Vorheizung zu beschleunigen.

Insbesondere handelt es sich bei der Temperierung um eine Erwärmung der Blasformen. Auf diese Weise werden im Arbeitsbetrieb erwärmte Blasformen, beispielsweise auf Temperaturen von 40 oder 60 oder mehr Grad Celsius erwärmte Blasformen zur Verfügung gestellt, welche für bestimmte Umformungsprozesse erwünscht sind.

Dabei wäre es möglich, unmittelbar die Blasformen zu erwärmen und insbesondere diejenigen Bereiche, die später mit den Kunststoffvorformlingen in Kontakt kommen. Es wäre jedoch auch möglich, etwaige Trägerschalen oder auch Träger der Blasformen zu erwärmen, wobei durch Konvektion auf diese Weise auch die Blasformen selbst miterwärmt werden. In diesem Falle werden die Blasformen zumindest mittelbar erwärmt.

Bevorzugt weisen die Blasformen wenigstens zwei Seitenteile auf und besonders bevorzugt zusätzlich noch ein Bodenteil, welche gemeinsam den Hohlraum ausbilden, innerhalb dessen die Kunststoffvorformlinge zu den Kunststoffbehältnissen und insbesondere Kunststoffflaschen expandiert werden. Dabei ist es möglich, dass eines dieser Seitenteile bezüglich des anderen Seitenteils zum Öffnen oder Schließen der Blasform schwenkbar ist.

Bei einem weiteren vorteilhaften Verfahren wird auch das besagte Bodenteil wenigstens zeitweise temperiert. Bevorzugt wird auch das Bodenteil der Blasform in während eines Stillstands des Trägers vortemperiert.

Bei einem weiteren bevorzugten Verfahren werden im Arbeitsbetrieb die Kunststoffvorformlinge auch mittels eines stangenartigen Körpers, der in diese eingeführt wird, expandiert.

Besonders bevorzugt werden die Blasformen durch Schwenken wenigstens eines Blasformteils gegenüber einem zweiten Blasformteil bezüglich einer vertikalen Achse und/oder bezüglich einer Achse, welche zu dem zu expandierenden Kunststoffvorformling parallel verläuft, geöffnet oder geschlossen.

Bei einem weiteren bevorzugten Verfahren werden die Kunststoffvorformlinge während ihrer Bewegung expandiert.

Besonders bevorzugt erfolgt die Temperierung durch Zufuhr von Energie, beispielsweise durch Zufuhr eines Temperiermediums und/oder durch Zufuhr von elektrischer Energie.

Besonders bevorzugt handelt es sich bei der Vortemperierung um eine Erwärmung und insbesondere eine Erwärmung der Blasformen auf oder nahezu auf die Betriebstemperatur. Es wäre auch möglich, dass die Blasformen (geringfügig) über eine Betriebstemperatur erwärmt werden, um dem Umstand Rechnung zu tragen, dass während der Zeit, in der die Energieversorgung vor die Vortemperierung abgekoppelt wird, wieder eine gewisse Abkühlung der Blasformen auftritt.

Bei einem weiteren bevorzugten Verfahren wird wenigstens zeitweise während des Arbeitsbetriebs eine weitere Temperierung der Blasformen vorgenommen. Dabei ist es insbesondere möglich, dass nachdem durch die Vortemperierung die Betriebstemperatur erreicht wird, diese durch Nacherwärmen gehalten wird.

Bevorzugt wird auch wenigstens zeitweise eine Temperatur der Blasformen erfasst. Dabei kann ein Regelkreis vorgesehen sein, der eine Temperierung der Blasformen auch in Abhängigkeit von einer festgestellten Temperatur der jeweiligen Blasformen bewirkt.

Bei einem weiteren bevorzugten Verfahren erfolgt das Vortemperieren wenigstens zeitweise mit einer höheren Leistung als die weitere Temperierung. Dies bedeutet, dass das Vortemperieren mit einer höheren Leistung vorgenommen wird, bis die Blasformen eine bestimmte Betriebstemperatur erreicht haben. Anschließend wird lediglich versucht diese Temperatur im laufenden Betrieb zu halten.

Im Falle einer Temperierung und insbesondere Erwärmung mit elektrische Energie kann dabei bevorzugt während des Vortemperierens eine höhere elektrische Energie zugeführt werden als im Arbeitsbetrieb. Im Falle einer Temperierung mit einem flüssigen Temperiermedium kann während der Phase des Vortemperierens das Temperiermedium mit einer höheren Temperatur, einer höheren Strömungsgeschwindigkeit, einem größeren Strömungsquerschnitt und/oder einem höheren Druck zugeführt werden.

Bei einem weiteren bevorzugten Verfahren wird wenigstens zeitweise während eines Stillstands wenigstens eine Zuführleitung zum Zuführen von Energie für das Vortemperieren angeschlossen. Dabei kann es sich wie oben erwähnt um eine elektrische Leitung handeln, aber auch um eine Flüssigkeitsleitung. Auch wäre es möglich, dass sowohl eine elektrische Leitung als auch eine Flüssigkeitsleitung angeschlossen werden. Nach dieser Vortemperierung werden wie unten genauer erläutert die Leitungen getrennt und die Maschine kann angefahren werden und insbesondere der bewegliche und bevorzugt drehbare Träger kann seine Drehung aufnehmen. Ab diesem Zeitpunkt muss für die einzelnen Umformungsstationen bzw. deren Blasformen nur noch die Betriebstemperatur gehalten werden.

Weiterhin ist es möglich, dass die besagten Zuführleitungen automatisch oder manuell angekoppelt werden. Dabei kann auch ein Roboter eingesetzt werden, der eine derartige Kopplung übernimmt.

Bevorzugt werden zu diesem Zweck automatische Kupplungen eingesetzt. Derartige automatische Kupplungen sind aus bestimmten Gebieten der Technik, beispielsweise im Schienenverkehr bekannt. Bevorzugt können dabei Kopplungen automatisch hergestellt und auch gelöst werden. Dabei kann es sich sowohl um eine Kupplung für eine elektrische Stromleitung handeln, als auch um eine Kupplung für eine Flüssigkeitsleitung.

Bei einem bevorzugten Verfahren erfolgt die Vortemperierung und/oder die weitere Temperierung über elektrische Heizelemente. Besonders bevorzugt werden hierfür elektrische Widerstandselemente eingesetzt und/oder zugeführt, um die Blasformen schneller auf eine Betriebstemperatur zu bringen. Dabei ist es möglich, dass eigens für den Vorgang des Vortemperierens derartige Heizelemente zugeführt werden. Es wäre jedoch auch möglich, dass diese Heizelemente permanent vorhanden sind und lediglich zum Vortemperieren der Blasformen bestromt werden. Bei einer weiteren Ausgestaltung werden in einer oder mehreren Fluidleitungen der Vorrichtung Temperiermedien geführt. In diesen Fluidleitungen befindet sich bevorzugt ein temperiertes Fluid, insbesondere eine erwärmte Flüssigkeit.

In einer weiteren Ausführungsform werden lediglich eine oder mehrere Versorgungsleitungen, insbesondere eine oder mehrere Stromleitungen angeschlossen, sodass die bereits vorhandenen Heizelemente die nötige Energie zur Verfügung haben, sodass die Betriebstemperatur schneller erreicht werden kann. Anschließend werden bevorzugt die Leitungen wieder getrennt und die Heizelemente müssen die Temperatur nur noch halten.

Die Kopplung, insbesondere diejenige der Versorgungsleitungen, besonders bevorzugt einer elektrischen Stromversorgungsleitung kann dabei wie oben erwähnt entweder automatisch über bestimmte Mittel, wie zum Beispiel pneumatische oder hydraulische Zylinder, Federelemente oder dergleichen erfolgen, als auch über eine manuelle Handlung des Bedieners.

Nachdem die Blasformen auf eine Temperatur im Bereich der Betriebstemperatur gebracht worden sind, werden die zusätzlichen Elemente automatisch oder manuell wieder entkoppelt. Die verbleibenden Heizelemente müssen daraufhin nur noch die Temperatur halten.

Eine weitere Möglichkeit, um die Betriebstemperatur schneller zu erreichen wäre die Nutzung einer Neck-(Hals)Kühlung als zusätzliches Temperiermittel. Dabei wäre es denkbar, die Temperatur des Kühlmediums für den Aufheizvorgang zu erhöhen, sodass dieses wie ein zusätzliches Heizmittel fungiert. Zur Aufnahme der Produktion wird die Temperatur des Kühlmediums wieder auf die eigentlich dafür vorgesehene Betriebstemperatur gebracht.

Wie oben erwähnt kann dieser Prozess des Vortemperierens bzw. Aufheizens insbesondere bei einer stehenden Maschine oder bei einer relativ langsamen Drehung stattfinden. So ist es beispielsweise aus dem internen Stand der Technik der Anmelderin bekannt, dass eine Neckkühlung für die Behältnisse über eine Drehdurchführung versorgt wird. Dabei kann eine Temperierung der Formen sowohl bei stehendem als auch bei drehendem Karussell erfolgen.

So wäre es denkbar, dass eine Drehdurchführung an ein integriertes Temperiergerät (ITG) angeschlossen wird. In diesem Fall ist es möglich, dass die Vorlauftemperatur variabel eingestellt wird, beispielsweise zwischen Temperaturen von 10°C (Kühlen beim Betrieb) und 95°C (insbesondere zum Heizen während eines Vorwärmens).

Auch wäre es möglich, dass mit einer solchen Anordnung mit elektrischen Heizelementen die benötigte Anschlussleitung in einem drehenden Karussell reduziert werden könnte. Im Betriebszustand könnten die Heizelemente (Heizstäbe etc.) die Temperatur dadurch regulieren, dass sie sich abwechselnd für eine gewisse Zeit an- bzw. ausschalten.

Bei einem bevorzugten Verfahren werden daher in einem Arbeitsbetrieb Blasformen unterschiedlicher Umformungsstationen wenigstens teilweise zeitlich versetzt zueinander temperiert. So ist es beispielsweise möglich, dass zu bestimmten Zeitabschnitten eine erste Hälfte der Blasformen temperiert wird und zu einem weiteren Zeitpunkt bzw. Zeitraum die andere Hälfte der Blasformen. Auch wäre es möglich, dass die Blasformen beispielsweise reihum oder nach einem anderen Prinzip abwechselnd temperiert werden. Auch wäre es möglich, dass während eines ersten Zeitraums die Blasformanordnungen einer ersten Gruppe von Umformungsstationen temperiert werden und in einem zweiten Zeitraum die Blasformanordnungen einer zweiten Gruppe von Umformungsstationen.

Diese Temperierung und auch die Vortemperierung kann über eine Steuereinheit gesteuert werden. Indem immer nur ein paar Heizelemente heizen ist die benötigte Leistung geringer und die Temperatur kann auf einem bestimmten Wert gehalten werden.

Weiterhin wäre es möglich, einen Roboter, insbesondere einen Roboter mit einem Greifarm einzusetzen, um die Elemente oder Versorgungsleitungen an- und abzukoppeln. Dies könnte beispielsweise mittels eines Wechselroboters erfolgen, der besonders bevorzugt neben dieser Aufgabe des An- und Abkoppelns auch die Aufgabe wahrnimmt, Blasformen einzuwechsein oder auch andere Aufgaben, wie etwa einen Wechsel von Reckstangen und dergleichen.

Besonders bevorzugt wird wenigstens ein Parameter gemessen, der für den Erwärmungsprozess relevant ist. So wird insbesondere aber nicht ausschließlich eine Ist-Temperatur der Blasformen gemessen. Daneben kann auch ein Wert gemessen werden, der für eine Heizleistung charakteristisch ist, wie etwa ein fließender Strom und/oder eine anliegende Spannung.

Daneben können auch weitere physikalische Parameter gemessen werden, wie etwa eine Umgebungstemperatur, ein Druck eines Temperiermediums oder dergleichen.

Bevorzugt ist dabei die Vorrichtung in der Lage mit Hilfe von bestimmten Sensoren oder Messmitteln einen Zustand der Maschine zu erkennen und basierend auf bestimmten Signalen, wie etwa der Messung einer Temperatur, eines Betriebszustands oder dergleichen zu reagieren und bevorzugt auch entsprechende Anpassungen wie insbesondere aber nicht ausschließlich das Koppeln einer Stromzuführung oder die Zuführung von zusätzlichen Heizelementen auszuführen. Falls ein entsprechendes Signal gegeben oder ein bestimmter Wert oder Zustand detektiert wird, werden die gekoppelten Versorgungsleitungen bzw. Heizelemente wieder, bevorzugt automatisch, entkoppelt.

Besonders bevorzugt wird zumindest im Arbeitsbetrieb ein bestimmter Ist-Wert, etwa eine Ist-Temperatur, mit einer Soll-Temperatur verglichen und, insbesondere mittels eines Regelkreises eine Temperatur der wenigstens einen Umformungsstation nachgeregelt. Besonders bevorzugt erfolgt ein Heizen der einzelnen Umformungsstationen getrennt und/oder unabhängig voneinander.

Bei einem weiteren bevorzugten Verfahren werden zunächst, insbesondere in einem Stillstand der Vorrichtung und insbesondere des Trägers zusätzliche Versorgungsleitungen zugeführt. Dabei kann es sich um eine zentrale Versorgungsleitung handeln, die auf der Maschine auf die einzelnen Umformungsstationen aufgeteilt wird. Auch wäre es möglich, den einzelnen Umformungsstationen jeweils separate Zuführungsleitungen zuzuführen.

In einem weiteren Verfahrensschritt werden über einen vorgegebenen Zeitraum die Blasformen vortemperiert bzw. vorgeheizt. In einem weiteren Verfahrensschritt werden die besagten Zuführleitungen abgekoppelt. In einem weiteren Verfahrensschritt wird die Maschine in Betrieb genommen. Insbesondere wird dabei eine Bewegung des Trägers und insbesondere eine Drehbewegung gestartet.

Die vorliegende Erfindung ist weiterhin auf eine Vorrichtung zum Umformen von Kunststoffvorformlingen zu Kunststoffbehältnissen und insbesondere Kunststoffflaschen gerichtet. Diese Vorrichtung weist einen bewegbaren und insbesondere drehbaren Träger auf, an dem eine Vielzahl von Umformungsstationen angeordnet ist, wobei jede dieser Umformungsstationen eine Blasformanordnung aufweist, welche zum Umformen der Kunststoffvorformlinge zu den Kunststoffbehältnissen geeignet und bestimmt ist und wobei diese Blasformanordnung in einem geöffneten und einem geschlossenen Zustand anordenbar bzw. bewegbar ist und in dem geschlossenen Zustand einen Hohlraum ausbildet, innerhalb dessen die Kunststoffvorformlinge durch Beaufschlagung mit einem fließfähigen Medium zu einem Kunststoffbehältnis expandierbar sind und wobei die Umformungsstation jeweils Temperiereinrichtungen aufweisen, um wenigstens einen Abschnitt der Blasformanordnung wenigstens zeitweise zu temperieren.

Erfindungsgemäß weist die Vorrichtung Anschlussmittel auf, um in einem stehenden oder langsam drehenden bzw. bewegenden Zustand des Trägers Zuführleitungen anzubringen, um die Temperiereinrichtung mit Energie zu versorgen, wobei hierdurch insbesondere eine Vortemperierung der Blasformanordnungen erfolgt.

Insbesondere werden Temperiereinrichtungen zum Vortemperieren der Blasformanordnungen mit elektrischer Energie oder unmittelbar mit Wärmeenergie, etwa von einer Flüssigkeit stammend, versorgt.

Besonders bevorzugt ist die hier beschriebene Vorrichtung geeignet und bestimmt, das oben beschriebene Verfahren auszuführen. Es wird darauf hingewiesen, dass sämtliche Merkmale, welche im Rahmen dieser Beschreibung vorrichtungsseitig erwähnt sind, im ebenfalls beschriebenen Verfahren auch eine entsprechende Anwendung finden. Umgekehrt werden auch sämtliche Verfahrensschritte, die mit bestimmten Einrichtungen durchgeführt werden, derart ausgelegt, dass die entsprechende Vorrichtung die entsprechenden Einrichtungen besitzt.

Bevorzugt handelt es sich bei den Anschlussmitteln um elektrische Anschlussmittel oder um Fließmittelanschlussmittel. Dies bedeutet, dass die Anschlussmittel in der Lage sind, die Blasformanordnung mit Strom zu versorgen oder aber mit einem fließfähigen Temperiermedium, wie beispielsweise heißem Öl oder heißem Wasser zu versorgen.

Besonders bevorzugt weist die Vorrichtung eine Vielzahl von derartigen Anschlussmitteln auf. So ist es möglich, dass jeder einzelnen Umformungsstation entsprechende Anschlussmittel zugeordnet werden. Es wäre jedoch auch möglich, dass die Vorrichtung eine Verteileinrichtung aufweist, welche beispielsweise elektrische Energie oder auch ein Fließmittel auf mehrere Umformungsstationen verteilt. Diese Verteileinrichtung könnte insbesondere in einem Stillstand des Trägers zentral versorgt werden.

Bei einer weiteren vorteilhaften Ausführungsform weist die Vorrichtung eine Wechseleinrichtung auf, welche dazu geeignet und bestimmt ist, halbautomatisch oder automatisch entsprechende Anschlussmittel zu entfernen oder aber anzubringen. Zu diesem Zweck könnte insbesondere ein Wechselroboter vorgesehen sein.

Bei einer weiteren vorteilhaften Ausführungsform weist die Vorrichtung eine Versorgungseinrichtung auf, um wenigstens einen Abschnitt der Blasformanordnung auch in einem Arbeitsbetrieb zu temperieren. So kann beispielsweise zusätzlich zu den im Stand oder im langsamen Betrieb montierbaren Anschlussmitteln ein Verteiler vorgesehen sein, der auch im laufenden Betrieb eine Temperierung der Blasformanordnungen ermöglicht.

So wäre es möglich, dass die Vorrichtung eine Schleifringanordnung aufweist, welche im laufenden Betrieb eine elektrische Versorgung der einzelnen Umformungsstationen bzw. deren Blasformanordnungen ermöglicht. Daneben könnte auch ein Flüssigkeitsverteiler vorhanden sein, der im laufenden Betrieb die einzelnen Umformungsstationen bzw. insbesondere deren Blasformanordnungen mit einem fließfähigen Temperiermittel und insbesondere einem flüssigen Temperiermittel versorgt.

Bei einer weiteren vorteilhaften Ausführungsform weist die Versorgungseinrichtung eine Steuerungseinrichtung auf, um die einzelnen Umformungsstationen bzw. deren Blasformanordnungen zumindest teilweise zeitlich versetzt mit Energie und insbesondere elektrischer Energie zu versorgen. So könnte beispielsweise die Zuführung zu den einzelnen Umformungsstationen zeitlich gesteuert werden und dabei insbesondere darauf geachtet werden, dass die einzelnen Umformungsstationen zu unterschiedlichen Zeiten temperiert werden. Insbesondere dient diese Versorgungseinrichtung dazu, die einzelnen Umformungsstationen bzw. deren Blasformanordnungen auf einer Betriebstemperatur zu halten, welche durch den Vortemperierungsvorgang erreicht wurde.

Bei einer weiteren vorteilhaften Ausführungsform weisen die Umformungseinrichtungen jeweils elektrisch betreibbare Heizelemente zum Erwärmen der Blasformanordnungen auf und besonders bevorzugt Schalteinrichtungen zum Steuern dieser Heizelemente. Dabei kann es sich bei diesen Steuerungseinrichtungen bevorzugt um Relais und insbesondere um Halbleiterrelais handeln. Bevorzugt handelt es sich bei den Heizelementen um Heizpatronen. Diese können permanent in den Blasformanordnungen bzw. den Umformungsstationen vorgesehen sein, es wäre jedoch auch möglich, dass einzelne Heizelemente speziell für den Vorgang des Vortemperierens zugeführt werden.

Bei einer bevorzugten Ausführungsform weist die Vorrichtung einen Drehverteiler und insbesondere einen elektrischen Drehverteiler auf, der die einzelnen Halbleiterrelais versorgt.

Bei einer weiteren bevorzugten Ausführungsform weist die Vorrichtung eine Temperaturmesseinrichtung auf, welche wenigstens eine Temperatur einzelner Umformungsstationen und insbesondere deren Blasformanordnungen erfasst. Hierbei kann es sich insbesondere um eine Temperaturmesseinrichtung handeln, welche die Temperatur berührungslos erfasst, wie insbesondere aber nicht ausschließlich ein Pyrometer. Bei einer weiteren vorteilhaften Ausführungsform weist die Vorrichtung einen Regelkreis auf, der dazu geeignet und bestimmt ist, die einzelnen Umformungsstationen anzusteuern und/oder mit elektrischer Energie zu versorgen.

Die Verwendung von Halbleiterrelais bringt den Vorteil, dass diese einen kleineren Raum benötigen als ansonsten im Stand der Technik vorgesehene Heizungssteller.

Über die Halbleiterrelais können die elektrischen Heizelemente sehr gut und präzise gesteuert werden. Da für das Halten der Temperatur nicht die vollständige Leistung aller Heizelemente notwendig ist, können diese abwechselnd für eine gewisse Zeit ein- und ausgeschaltet werden. Folglich verbrauchen nicht alle Heizelemente gleichzeitig Strom und dementsprechend ist die benötigte Gesamtanschlussleistung geringer.

Durch das Hinzubringen von zusätzlichen Versorgungsleitungen, insbesondere Stromzuführungen oder weiteren Heizelementen, werden die Blasformanordnungen schneller auf die erforderte Betriebstemperatur gebracht und dementsprechend kann die Vorrichtung schneller mit der Produktion beginnen.

Dies sorgt für eine erhöhte Produktionsrate und folglich auch für einen höheren wirtschaftlichen Gewinn. Durch eine automatische Kopplung, zum Beispiel über einen pneumatischen oder hydraulischen Zylinder könnte die Kopplungszeit ebenfalls reduziert werden, da es keinen handgreiflichen Schritt erfordern würde.

Ebenfalls würde eine automatische Kopplung eine bessere Steuerung ermöglichen und die Gefahr von fehlerhaftem Arbeiten und daraus folgenden Schäden ist verringert. Ein weiterer Vorteil bei einer solchen Vorrichtung besteht darin, dass man kleinere Komponenten innerhalb der Maschine benötigt. Bei der Verwendung von elektrischen Heizelementen zum Halten der Temperatur der Blasformanordnungen kann weiterhin der Schleifring verkleinert werden und somit Platz und Kosten gespart werden, da die Versorgungsleitungen kleiner sein könnten.

Würde man die Temperatur mit einem fließfähigen Medium halten, so könnte auch der hierzu erforderliche Drehverteiler kleiner gestaltet werden, da die Versorgungsleitungen kleiner sein könnten. Dies würde ebenfalls Platz und Kosten sparen.

Durch die spezielle Steuerung der einzelnen Heizelemente könnte der Schleifring (bzw. der Drehverteiler für das Temperiermedium) noch kleiner gestaltet werden. Zum Halten der Temperatur könnten die Heizelemente für eine gewisse Zeit an- und wieder ausgeschaltet werden. Somit würden nicht alle Heizelemente in Betrieb sein und die benötigte Anschlussleistung wäre niedriger.

Es wäre weiterhin auch möglich, dass ein Vortemperieren der Blasform über elektrische Anschlussmittel erfolgt und das Temperieren im Arbeitsbetrieb beispielsweise über eine Fließmittelversorgung. Umgekehrt wäre es auch möglich, dass das Vortemperieren der Blasformen über eine Fließmittelversorgung erfolgt und das Aufrechterhalten der Betriebstemperatur im Betrieb über elektrische Zuheizmittel. Daneben könnten auch beide Temperiervorgänge mit elektrischer Energie oder auch mittels eines Temperiermediums erfolgen

Weitere Vorteile und Ausführungsformen ergeben sich aus den beigefügten Zeichnungen.

Darin zeigen:
- Fig. 1: Eine erfindungsgemäße Vorrichtung in einer ersten Ausführungsform;
- Fig. 2: Eine erfindungsgemäße Vorrichtung in einer zweiten Ausführungsform;
- Fig. 3: Eine erfindungsgemäße Vorrichtung in einer dritten Ausführungsform.

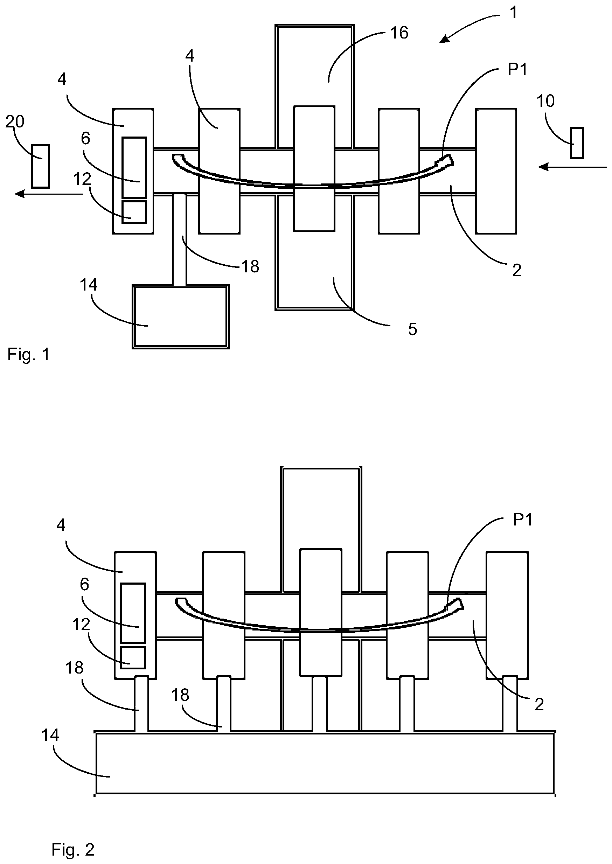

Figur 1 zeigt eine erfindungsgemäße Vorrichtung 1 zum Umformen von Kunststoffvorformlingen 10 zu Kunststoffbehältnissen und insbesondere Kunststoffflaschen 20. Dabei werden, wie durch den rechten Pfeil gezeigt, der Vorrichtung Kunststoffvorformlinge 10 zugeführt und diese durch Beaufschlagung mit einem fließfähigen Medium zu den Kunststoffbehältnissen 20 umgeformt, die anschließend aus der Maschine abgeführt werden.

Zu diesem Zweck weist die Vorrichtung einen drehbaren Träger 2 auf, an dem eine Vielzahl von Umformungsstationen 4 angeordnet ist, welche sich damit entlang kreisförmigen Transportpfads entlang des Pfeils P bewegen. Die einzelnen Umformungseinrichtungen bzw. Umformungsstationen 4 weisen jeweils (nur eine gezeigt) Blasformanordnungen 6 auf, sowie auch Temperiereinrichtungen 12.

Das Bezugszeichen 16 kennzeichnet eine Antriebswelle zum Antreiben des Trägers 2. Das Bezugszeichen 5 kennzeichnet einen Drehverteiler mit dessen Hilfe elektrische Energie oder auch ein Temperiermedium auf die einzelnen Umformungsstationen verteilt werden kann. Dieser Drehverteiler kann dabei beispielsweise ein Temperiermedium auf die Stationen aufteilen oder auch elektrische Energie (in diesem Fall kann der Drehverteiler insbesondere ein Schleifring sein.

Das Bezugszeichen 14 kennzeichnet ein Erwärmungsaggregat, welches in einem insbesondere stehenden Zustand des Trägers an die Vorrichtung angeschlossen wird. Dabei kann es sich, wie hier gezeigt, um ein elektrisches Aggregat handeln, welches über eine Verbindungsleitung 18 mit den einzelnen Umformungsstationen verbunden ist. Zu diesem Zweck kann das Blasrad bzw. der Träger 2 eine zentrale Stromzuführung aufweisen, welche wiederum die Ströme zum Vortemperieren bzw. Vorheizen der Blasformanordnungen 6 auf die einzelnen Umformungsstationen verteilt.

Figur 2 zeigt eine weitere Ausführungsform der vorliegenden Erfindung. Der wesentliche Unterschied besteht hier darin, dass nicht nur eine Zuführleitung 18 vorgesehen ist, sondern eine Vielzahl von Zuführleitungen, welche eine Energieversorgungseinrichtung mit den einzelnen Umformungsstationen verbindet. Auf diese Weise werden hier die einzelnen Umformungsstationen bzw. Blasformanordnungen separat beheizt.

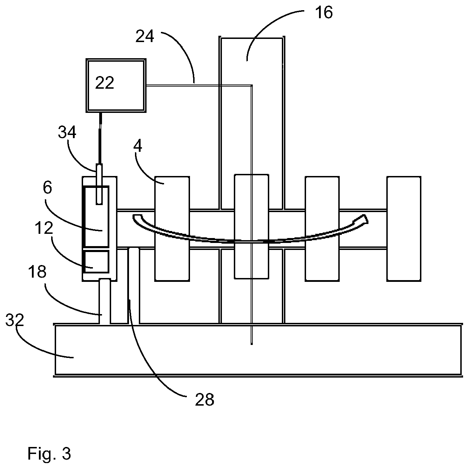

Figur 3 zeigt eine weitere Ausführungsform der vorliegenden Erfindung. Hier ist ebenfalls wieder eine Zuführleitung 18 vorgesehen, welche im laufenden Betrieb die Umformungsstationen mit elektrischer Energie versorgen kann. Zusätzlich oder alternativ kann auch eine zentrale Versorgungsleitung 28 vorgesehen sein, welche wiederum zentral die Umformungseinrichtung beispielsweise mit einem fließfähigen Medium oder auch mit elektrischer Energie versorgt. Daneben weist die Vorrichtung hier eine Energieversorgungsleitung 24 auf, die auch im laufenden Betrieb die Temperatur der einzelnen Blasformanordnungen 6 aufrechterhält. Zu diesem Zweck ist ein hier nur schematisch dargestelltes Halbleiterrelais 22 vorgesehen, welches die einzelnen Umformungsstationen bzw. Heizelemente (bzw. in diesem Falle eine Umformungsstation) der Umformungsstationen wahlweise ansteuern kann. Auf diese Weise kann wie oben erwähnt der Energiebedarf zum Erwärmen der einzelnen Blasformanordnungen gesenkt werden.

Dabei ist es möglich, dass dieses Heizelement 34 permanent an der Umformungsstation 4 angeordnet ist, es ist jedoch auch denkbar, dass das Heizelement eigens für den Temperiervorgang der Umformungsstation zugeführt wird. Auch die Temperiereinrichtung 12 kann für den Vorgang des Vortemperierens zugeführt werden oder auch permanent an der Umformungsstation und/oder Blasformanordnung und/oder Trägerschale angeordnet sein.1 Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Vorrichtung
- 2: drehbarer Träger
- 4: Umformungsstationen
- 5: Drehverteiler
- 6: Blasformanordnungen
- 10: Kunststoffvorformlinge
- 12: Temperiereinrichtungen
- 14: Erwärmungsaggregat
- 16: Antriebswelle
- 18: Verbindungsleitung
- 20: Kunststoffflaschen
- 22: Halbleiterrelais
- 24: Energieversorgungsleitung
- 28: zentrale Versorgungsleitung
- 34: Heizelemente
- P: Pfeil

## Patentansprüche

1. Verfahren zum Betreiben einer Vorrichtung (1) zum Umformen von Kunststoffvorformlingen (10) zu Kunststoffbehältnissen (20), wobei in einem Arbeitsbetrieb mittels eines bewegbaren Trägers (2) eine Vielzahl von Umformungsstationen (4) entlang eines vorgegebenen Transportpfads bewegt wird, wobei diese Umformungsstationen (4) jeweils Blasformanordnungen (6) aufweisen, welche in einem geschlossenen Zustand jeweils Hohlräume ausbilden, innerhalb deren die Kunststoffvorformlinge zu den Kunststoffbehältnissen umgeformt werden und diesen Umformungsstationen (4) die Kunststoffvorformlinge (10) zugeführt werden, um durch Zuführung eines fließfähigen Mediums zu den Kunststoffbehältnissen (20) umgeformt zu werden, wobei diese Umformung wenigstens zeitweise während des Transports der Umformungsstationen (4) entlang des Transportpfads erfolgt, und wobei wenigstens zeitweise wenigstens Bestandteile der Blasformanordnung (6) temperiert werden,
**dadurch gekennzeichnet, dass**
in einem Stillstand des Trägers (2) oder einer Bewegung des Trägers (2), welche gegenüber einer Bewegung des Trägers (2) im Arbeitsbetrieb verlangsamt ist, eine Vortemperierung zumindest von Bestandteilen der Blasform (6) erfolgt und wenigstens zeitweise während des Arbeitsbetriebs eine weitere Temperierung der Blasformanordnungen vorgenommen wird.

2. Verfahren nach wenigstens einem der vorangegangenen Ansprüche,
**dadurch gekennzeichnet, dass**
das Vortemperieren wenigstens zeitweise mit einer höheren Heizleistung erfolgt als die weitere Temperierung.

3. Verfahren nach wenigstens einem der vorangegangenen Ansprüche,
**dadurch gekennzeichnet, dass**
wenigstens zeitweise während des Stillstands wenigstens eine Zuführleitung zum Zuführen von Energie für das Vortemperieren angeschlossen wird.

4. Verfahren nach Anspruch 3,
**dadurch gekennzeichnet, dass**
die Zuführleitung eine elektrische Leitung oder eine Fließmittelleitung ist.

5. Verfahren nach wenigstens einem der vorangegangenen Ansprüche,
**dadurch gekennzeichnet, dass**
die Vortemperierung und/oder die weitere Temperierung über elektrische Heizelemente erfolgt.

6. Verfahren nach wenigstens einem der vorangegangenen Ansprüche,
**dadurch gekennzeichnet, dass**
während des Arbeitsbetriebs Blasformen unterschiedlicher Umformungsstationen wenigstens teilweise zeitlich versetzt temperiert werden.

7. Vorrichtung zum Umformen von Kunststoffvorformlingen (10) zu Kunststoffbehältnissen (20) und insbesondere Kunststoffflaschen, mit einem bewegbaren Träger (2), an dem eine Vielzahl von Umformungsstationen (4) angeordnet ist, wobei jede dieser Umformungsstationen (4) eine Blasformanordnung (6) aufweist, welche zum Umformen der Kunststoffvorformlinge (10) zu den Kunststoffbehältnissen (20) geeignet und bestimmt ist und wobei diese Blasformanordnung (6) in einem geöffneten und einem geschlossenen Zustand anordenbar ist und in dem geschlossenen Zustand einen Hohlraum ausbildet, innerhalb dessen die Kunststoffvorformlinge (10) durch Beaufschlagung mit einem fließfähigen Medium zu den Kunststoffbehältnissen (20) expandierbar sind, und wobei die Umformungsstationen jeweils Temperiereinrichtungen (12) aufweisen, um wenigstens einen Abschnitt der Blasformanordnung (6) wenigstens zeitweise zu temperieren,
**dadurch gekennzeichnet, dass**
die Vorrichtung Anschlussmittel aufweist, um in einem stehenden oder langsam drehenden Zustand des Trägers (2) Zuführleitungen anzubringen, um die Temperiereinrichtungen (12) mit Energie zu versorgen, so dass ein energieaufwendiges Vortemperieren der Blasformen nicht in einem laufenden Betrieb der Vorrichtung erfolgt und die Vorrichtung eine Versorgungseinrichtung aufweist, um wenigstens einen Abschnitt der Blasformanordnung auch im Arbeitsbetrieb zu temperieren.

8. Vorrichtung nach Anspruch 7,
**dadurch gekennzeichnet, dass**
die Umformungseinrichtungen jeweils elektrisch betreibbare Heizelemente zum Erwärmen der Blasformanordnungen aufweisen und bevorzugt Schalteinrichtungen zu Steuern dieser Heizelemente.

## Claims

1. Method for operating an apparatus (1) for forming plastic preforms (10) into plastic containers (20), wherein in a working mode a plurality of forming stations (4) are moved along a predetermined transport path by means of a movable carrier (2), wherein these forming stations (4) in each case having blow mould arrangements (6) which, in a closed state, in each case form cavities within which the plastic preforms are formed into the plastic containers and the plastic preforms (10) are fed to these forming stations (4), in order to be formed by supplying a flowable medium to the plastic containers (20), wherein this forming takes place at least temporarily during the transport of the forming stations (4) along the transport path, and wherein at least temporarily at least components of the blow mould arrangement (6) being tempered,
**characterised in that**
at least parts of the blow mould (6) are pre-heated in a standstill of the carrier (2) or a movement of the carrier (2) which is slower with respect to a movement of the carrier (2) in working mode and at least at times during the working mode a further tempering of the blow mould arrangement is carried out.

2. Method according to at least one of the preceding claims,
**characterised in that**
the pre-heating is carried out at least temporarily with a higher heating power than the further tempering.

3. Method according to at least one of the preceding claims,
**characterised in that**
at least temporarily during the standstill at least one supply line is connected for supplying energy for pre-heating.

4. Method according to claim 3,
**characterised in that**
the supply line is an electrical line or a fluid means line.

5. Method according to at least one of the preceding claims,
**characterised in that**
the pre-heating and/or the further tempering is carried out by means of electrical heating elements.

6. Method according to at least one of the preceding claims,
**characterised in that**
during the working mode, blow moulds of different forming stations are at least partially temperature-controlled with a time delay.

7. Apparatus for forming plastic preforms (10) into plastic containers (20) and in particular plastic bottles, with a movable carrier (2) on which a plurality of forming stations (4) are arranged, wherein each of these forming stations (4) has a blow mould arrangement (6) which is suitable and intended for forming the plastic preforms (10) into the plastic containers (20) and wherein this blow mould arrangement (6) can be arranged in an open and a closed state and form a cavity in the closed state, within which the plastic preforms (10) can be expanded to the plastic containers (20) by being acted upon by a flowable medium, and wherein the forming stations in each case comprise temperature control means (12) for at least temporarily tempering at least a portion of the blow mould arrangement (6),
**characterised in that**
the apparatus comprises connecting means for attaching supply lines in a stationary or slowly rotating state of the carrier (2) in order to supply the temperature control means (12) with energy, so that that an energy-intensive pre-heating of the blow moulds should not take place while the machine is running and the apparatus has a supply device for tempering at least a section of the blow mould arrangement also in working mode.

8. Apparatus according to claim 7,
**characterised in that**
the forming devices in each case have electrically operable heating elements for heating the blow mould arrangements and preferably switching devices for controlling these heating elements.

## Revendications

1. Procédé de fonctionnement d'un dispositif (1) pour le formage d'ébauches en matière plastique (10) en récipients en matière plastique (20), dans lequel dans un mode de travail au moyen d'un support (2) mobile, une pluralité de postes de formage (4) est déplacée le long d'une voie de transport prédéfinie, dans lequel ces postes de formage (4) présentent respectivement des agencements de moule de soufflage (6) qui réalisent dans un état fermé respectivement des espaces creux, à l'intérieur desquels les ébauches en matière plastique sont formées en récipients en matière plastique et à ces postes de formage (4) sont fournies des ébauches en matière plastique (10) afin d'être formées en récipients en matière plastique (20) par alimentation d'un fluide coulant, dans lequel ce formage est effectué au moins temporairement pendant le transport des postes de formage (4) le long de la voie de transport, et dans lequel au moins des constituants de l'agencement de moule de soufflage (6) sont thermorégulés au moins temporairement,
**caractérisé en ce que**
dans un état de repos du support (2) ou lors d'un mouvement du support (2) qui est ralenti en mode de travail par rapport à un mouvement du support (2), une thermorégulation préalable au moins de constituants du moule de soufflage (6) est effectuée et une autre thermorégulation des agencements de moule de soufflage est entreprise au moins temporairement pendant le mode de travail.

2. Procédé selon au moins l'une quelconque des revendications précédentes,
**caractérisé en ce que**
la thermorégulation préalable est effectuée au moins temporairement avec une puissance de chauffage supérieure à celle de l'autre thermorégulation.

3. Procédé selon au moins l'une quelconque des revendications précédentes,
**caractérisé en ce que**
au moins une conduite d'alimentation pour l'alimentation en énergie pour la thermorégulation préalable est raccordée au moins temporairement pendant l'état de repos.

4. Procédé selon la revendication 3,
**caractérisé en ce que**
la conduite d'alimentation est une conduite électrique ou une conduite d'agent coulant.

5. Procédé selon au moins l'une quelconque des revendications précédentes,
**caractérisé en ce que**
la thermorégulation préalable et/ou l'autre thermorégulation est effectuée par le biais d'éléments chauffants électriques.

6. Procédé selon au moins l'une quelconque des revendications précédentes,
**caractérisé en ce que**
pendant le mode de travail, des moules de soufflage de différents postes de formage sont thermorégulés au moins partiellement en décalage dans le temps.

7. Dispositif de formage d'ébauches en matière plastique (10) en récipients en matière plastique (20) et en particulier en bouteilles en matière plastique, avec un support mobile (2), au niveau duquel une pluralité de postes de formage (4) est agencée, dans lequel chacun de ces postes de formage (4) présente un agencement de moule de soufflage (6) qui est approprié et destiné au formage des ébauches en matière plastique (10) en récipients en matière plastique (20) et dans lequel cet agencement de moule de soufflage (6) peut être agencé dans un état ouvert et un état fermé et réalise dans l'état fermé un espace creux, à l'intérieur duquel les ébauches en matière plastique (10) sont expansibles par alimentation en un fluide coulant en récipients en matière plastique (20), et dans lequel les postes de formage présentent respectivement des dispositifs de thermorégulation (12) afin de thermoréguler au moins temporairement au moins une section de l'agencement de moule de formage (6),
**caractérisé en ce que**
le dispositif présente des moyens de raccordement afin de monter dans un état fixe ou tournant lentement du support (2) des conduites d'alimentation afin d'alimenter en énergie les dispositifs de thermorégulation (12) de sorte qu'une thermorégulation préalable énergivore des moules de soufflage ne soit pas effectuée dans un fonctionnement courant du dispositif et le dispositif présente un dispositif d'alimentation afin de thermoréguler au moins une section de l'agencement de moule de soufflage également en mode de travail.

8. Dispositif selon la revendication 7,
**caractérisé en ce que**
les dispositifs de formage présentent respectivement des éléments chauffants fonctionnant électriquement pour le chauffage des agencements de moule de soufflage et de préférence des dispositifs de commutation pour commander ces éléments chauffants.
